# EUROPEAN PATENT APPLICATION

(11) **EP 4 813 754 A1**
(43) Date of publication of application: **30.09.2026**
(21) Application number: 25227506.0
(22) Date of filing: 29.12.2025
(51) Int. Cl.: B60R 9/06

(54) **BICYCLE CARRIER BALL-CLAMP CONTROL HANDLE STRUCTURE**

(30) Priority: 28.03.2025 TW 114112045
(71) Applicant: King Rack Industrial Co., Ltd., Taichung City (TW)
(72) Inventor: Wang, Chiu-Kuei, Taichung City (TW); Espesset, Hugues, 81160 SAINT-JUERY (FR); Girod, Frédéric, 81160 SAINT-JUERY (FR)
(74) Representative: Cabinet Chaillot

(57) **Abstract**

A bicycle carrier ball-clamp control handle structure includes a fixing base (10), a control handle (20), and a control portion (50). The fixing base (10) contains a ball-clamping assembly (11) for clamping a trailer ball (30) and has a shaft connection portion (12) at an upper end. The control handle (20) is shaft-connected to the shaft connection portion (12) to control clamping or releasing of the ball-clamping assembly (11). The control portion (50) at a front end of a main rod member (21) has a hollow structure with an inclined surface (51) featuring a viewing window (52). A latch hook (54) driven by a lock core (56) has an engaging end (541) that engages or separates from a positioning portion (13). When locked, a display surface (542) is visible through the viewing window (52). A torsion spring (55) automatically resets the latch hook (54) when unlocked, providing enhanced safety and convenience for quick trailer ball installation and removal.

## Description

### BACKGROUND OF THE INVENTION

### 1. Fields of the invention

The present invention relates to bicycle carrier accessories, and more particularly, to a bicycle carrier ball-clamp control handle structure, specifically applied to improving the way of handle locking of a bicycle carrier to enhance operational convenience and safety.

### 2. Descriptions of Related Art

Conventional bicycle carriers mostly adopt manual locking mechanisms. Due to asynchronous operation, the handle used for fixing can easily become loose, potentially causing the bicycle carrier to detach from the trailer ball and resulting in the bicycle carrier falling.

How to solve the above-mentioned problems is an issue that relevant industry practitioners are actively addressing.

The present invention intends to provide a bicycle carrier ball-clamp control handle structure to eliminate shortcomings mentioned above.

### SUMMARY OF THE INVENTION

The present invention provides a bicycle carrier ball-clamp control handle structure. The primary objective is to provide a latch hook with an automatic engaging structural, wherein the engagement status can be displayed through a viewing window on the handle, enabling users to quickly determine whether fixation has been completed.

A secondary objective of the present invention is that the latch hook and the torsion spring are coaxially connected. When the lock core rotates, the latch hook moves synchronously and automatically resets by the torsion spring when the lock core is released, thereby forming an automatic locking function.

The bicycle carrier ball-clamp control handle structure of the present invention comprises a fixing base which is internally provided with a ball-clamping assembly for clamping and fixing a trailer ball. The fixing base is provided at an upper end with a triangular shaft connection portion. A control handle is shaft-connected to the shaft connection portion of the fixing base, and the ball-clamping assembly is controlled by the control handle to perform clamping or releasing functions on the trailer ball. Characterized in that the control handle is provided with a side rod on each of two sides of a main rod member. The side rods are provided at front ends of the main rod member with a pivot portion corresponding to the shaft connection portion and being triangular in shape.

A control portion, wherein the control portion is combined at a front end of the main rod member. The control portion is a hollow structural member and includes an inclined surface. The inclined surface is provided with a viewing window defined therethrough. The inclined surface is provided at a lower end with a mounting hole. A latch hook and a torsion spring are mounted at the front end of the main rod member. The mounting hole includes a lock core installed therein. The latch hook and the torsion spring are coaxially connected, and the latch hook is driven to rotate by the lock core. The inclined surface is provided at a front end with an abutment wall for abutting and positioning the torsion spring. The latch hook is provided at a lower end with an engaging end. The engaging end is fixed to or separated from a positioning portion of the fixing base. The latch hook is bent at an upper end thereof to form a display surface.

When the fixing base locks the trailer ball in position, the engaging end of the latch hook is embedded in the positioning portion. By rotating the lock core, the position of the latch hook is locked, and the display surface is directly viewed through the viewing window, thereby confirming that the latch hook position has been locked. When unlocking is desired, the lock core is rotated to cause the engaging end of the latch hook to separate from the positioning portion, the display surface cannot be seen through the viewing window, and when the lock core is released, the latch hook is driven to rebound by the elasticity of the torsion spring for subsequent fixing use.

Preferably, the display surface of the latch hook is further coated with color.

Preferably, the lock core is provided with a semi-circular positioning surface, and the latch hook is driven to rotate by the positioning surface.

Preferably, the control portion is provided at a rear end with a sleeve portion, wherein the sleeve portion is used to enclose the main rod member.

Preferably, triangular washers are disposed between the shaft connection portion of the fixing base and the pivot portions.

Preferably, the fixing base is provided with a pivotable protective cover.

Through the above description, the features and effects of the present invention are briefly described as follows:
1. The lock core directly drives the latch hook and the torsion spring to rotate synchronously, providing operational convenience.
2. The torsion spring automatically resets the latch hook to achieve automatic locking function.
3. The viewing window allows direct observation of whether the latch hook has engaged with the positioning portion, enabling users to know whether the control handle is pressed and fixed to the fixing base.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a perspective view of the present invention;
Figure 2 is a structural view of the control handle;
Figure 3 is an exploded view of the present invention;
Figure 4 is a cross-sectional view (I) of the present invention;
Figure 5 is a cross-sectional view (II) of the present invention;
Figure 6 is a schematic view showing unlocking operation of the present invention, and
Figure 7 is a structural view of practical application of the present invention.

### DETAILED DESCRIPTION OF THE PREFERRED EMBODIMENT

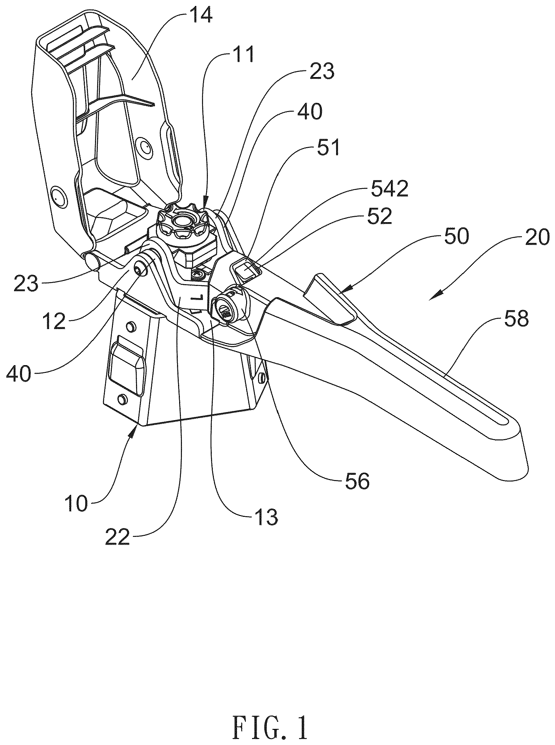

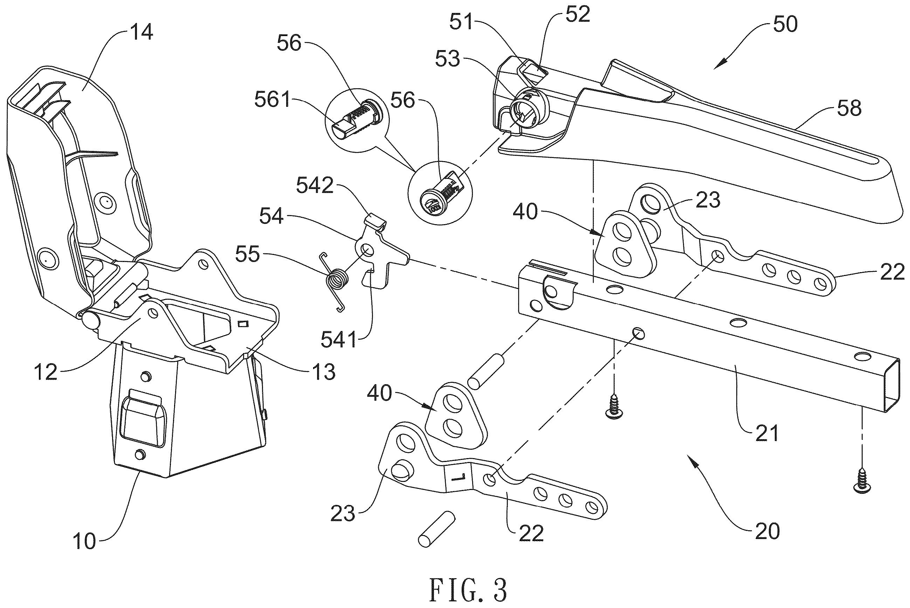

As shown in Figures 1 and 3, the bicycle carrier ball-clamp control handle structure of the present invention comprises a fixing base 10 and a control handle 20.

As shown in Figures 1, 3, 5 and 6, the fixing base 10 is internally provided with a ball-clamping assembly 11 for clamping and fixing a trailer ball 30. The fixing base 10 is provided at an upper end with a triangular shaft connection portion 12. Furthermore, when pressurized or released by the control handle 20, the ball-clamping assembly 11, can clamp or release the trailer ball 30.

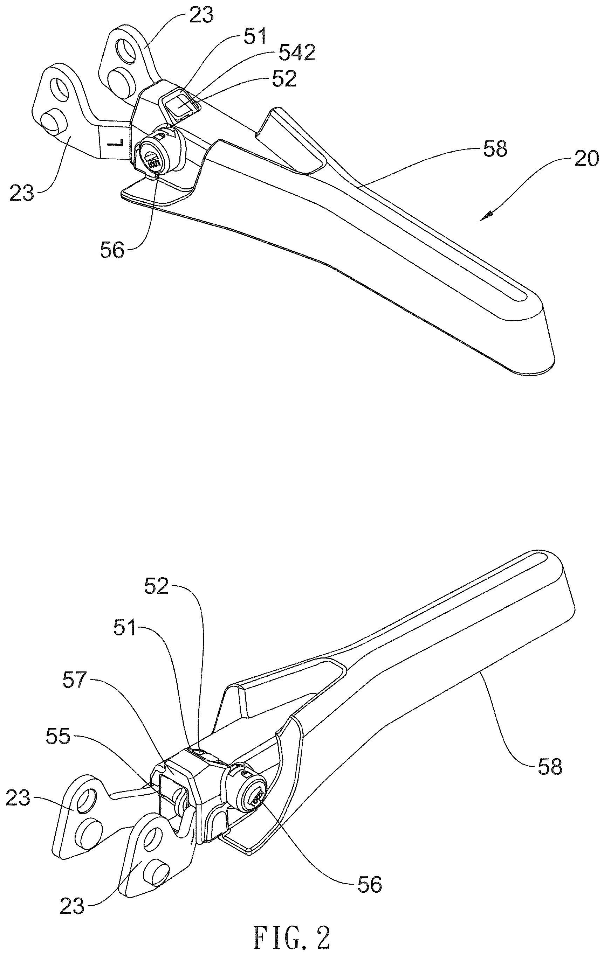

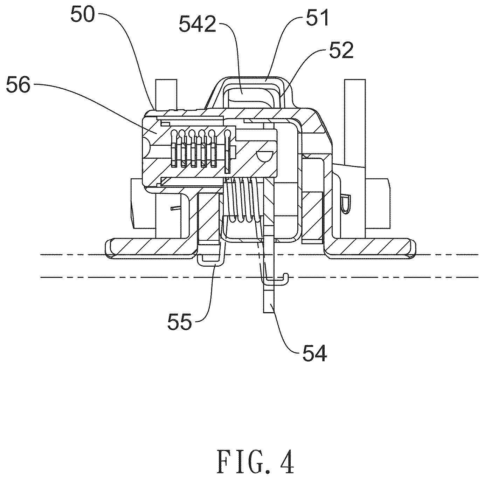

As shown in Figures 1 to 5, the control handle 20 is pivotably connected to the shaft connection portion 12 of the fixing base 10, and the ball-clamping assembly 11 is controlled by the control handle 20 to perform clamping or releasing functions on the trailer ball 30.

The control handle 20 is provided with a side rod 22 on each of two sides of a main rod member 21, wherein the side rods 22 are provided at front ends with a pivot portion 23 corresponding to the shaft connection portion 12 and being triangular in shape. Additionally, as shown in Figure 3, triangular washers 40 are disposed between the shaft connection portion 12 of the fixing base 10 and the pivot portions 23.

A control portion 50 is provided at a front end of the control handle 20. The control portion 50 is combined at the front end of the main rod member 21. The control portion 50 is a hollow structural member. The control portion 50 is provided with an inclined surface 51. The inclined surface 51 is provided with a viewing window 52 defined therethrough. The inclined surface 51 is provided at a lower end with a mounting hole 53. A latch hook 54 and a torsion spring 55 are provided internally at the front end of the main rod member 21. The mounting hole 53 provides installation for a lock core 56. The latch hook 54 and the torsion spring 55 are coaxially connected, and the latch hook 54 is driven by the lock core 56. Additionally, the inclined surface 51 is provided at a front end with an abutment wall 57 for abutting and positioning the torsion spring 55. The latch hook 54 is provided at a lower end with an engaging end 541. The engaging end 541 is fixed to or separated from a positioning portion 13 of the fixing base 10. Additionally, the latch hook 54 is bent at an upper end to form a display surface 542, which can be coated with color for identification.

Additionally, the control portion 50 is further provided at a rear end with a sleeve portion 58, wherein the sleeve portion 58 encloses and conceals the main rod member 21.

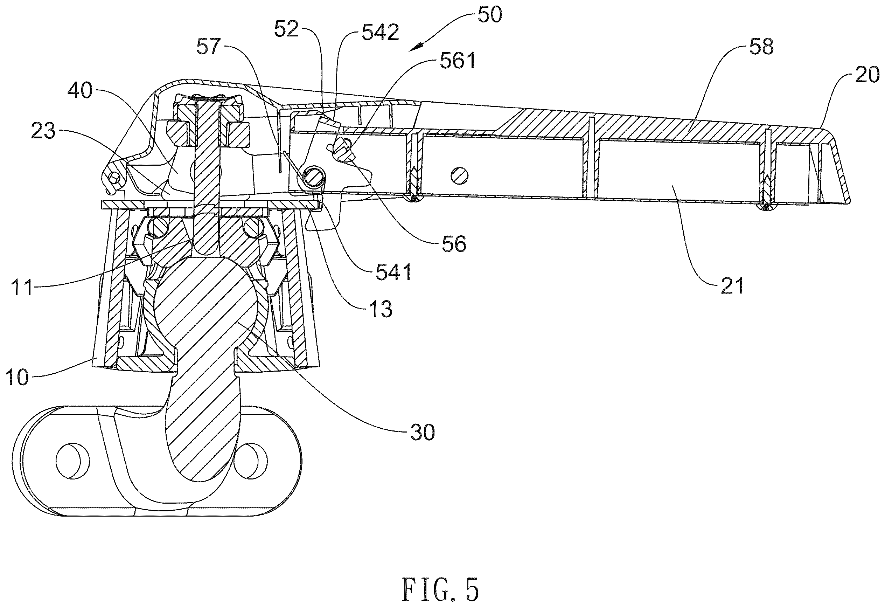

As shown in Figure 5, when the fixing base 10 locks the trailer ball 30 in position, the engaging end 541 of the latch hook 54 is embedded in the positioning portion 13. By rotating the lock core 56, the position of the latch hook 54 is locked, and the display surface 542 can be directly viewed through the viewing window 52, thereby confirming that the latch hook 54 position has been locked.

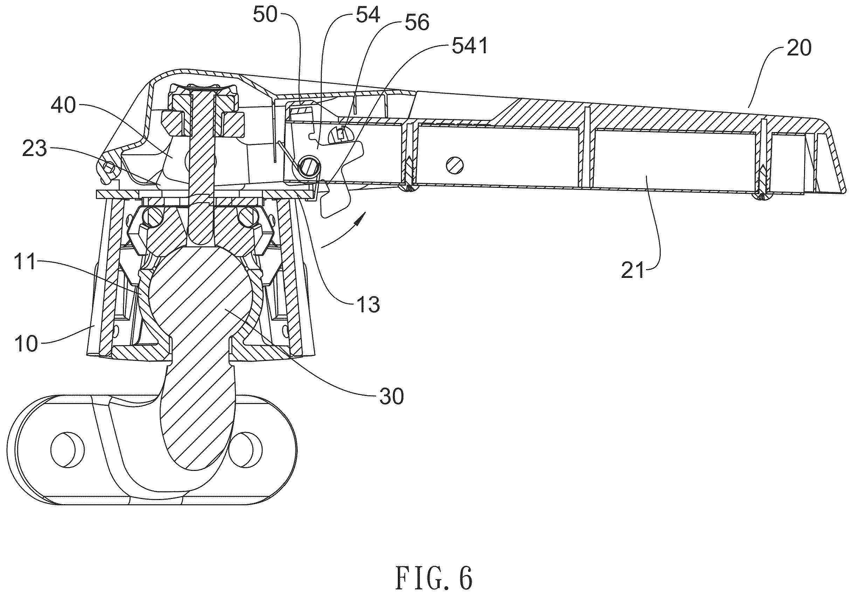

As shown in Figure 6, when unlocking is desired, the lock core 56 is rotated to cause the engaging end 541 of the latch hook 54 to separate from the positioning portion 13. Under this state, the display surface 542 cannot be seen through the viewing window 52. When the lock core 56 is released, the latch hook 54 is driven to rebound by the elasticity of the torsion spring 55 for subsequent fixing use.

Furthermore, as shown in Figure 3, the lock core 56 is provided with a semi-circular positioning surface 561, and the latch hook 54 is driven to rotate by the positioning surface 561, thereby enabling synchronous rotation with the lock core 56.

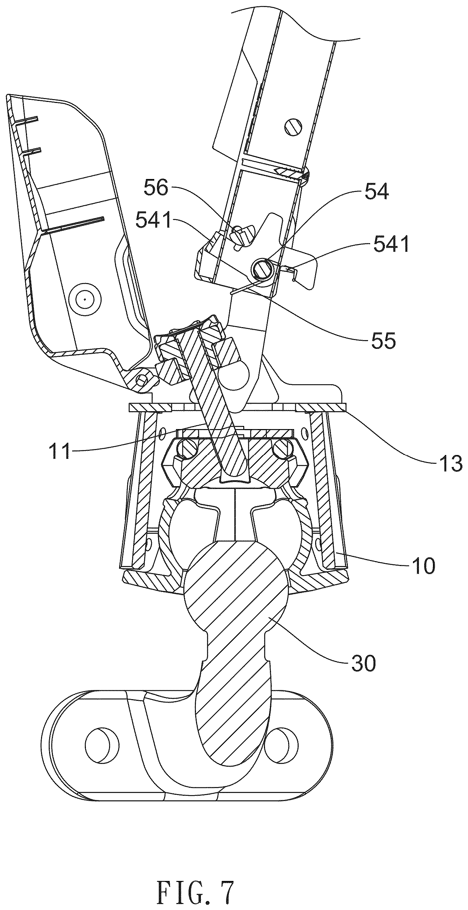

Accordingly, as shown in Figure 7, by pushing the control handle 20 upward, the ball-clamping assembly 11 is moved downward, thereby causing the ball-clamping assembly 11 to not clamp the trailer ball 30, allowing the fixing base 10 to separate from the trailer ball 30.

When the fixing base 10 is to clamp the trailer ball 30, the control handle 20 is pressed downward, allowing the engaging end 541 to engage the positioning portion 13, thereby achieving automatic locking effect.

While we have shown and described the embodiment in accordance with the present invention, it should be clear to those skilled in the art that further embodiments may be made without departing from the scope of the present invention.

## Claims

1. A bicycle carrier ball-clamp control handle structure, comprising:
a fixing base (10) internally provided with a ball-clamping assembly (11) for clamping and fixing a trailer ball (30), and the fixing base (10) provided at an upper end with a triangular shaft connection portion (12);
a control handle (20) pivotably connected to the shaft connection portion (12) of the fixing base (10), the ball-clamping assembly (11) being controlled by the control handle (20) to perform clamping or releasing functions on the trailer ball (30); **characterized in that**:
the control handle (20) is provided with a side rod (22) on each of two sides of a main rod member (21), the side rods (22) are provided at front ends with a pivot portion (23) corresponding to the shaft connection portion (12) and being triangular in shape;
a control portion (50) is combined at a front end of the main rod member (21), the control portion (50) is a hollow structural member, the control portion (50) is provided with an inclined surface (51), the inclined surface (51) is provided with a viewing window (52) defined therethrough, the inclined surface (51) is provided at a lower end with a mounting hole (53), a latch hook (54) and a torsion spring (55) are mounted at a front end of the main rod member (21), the mounting hole (53) provides installation for a lock core (56), the latch hook (54) and the torsion spring (55) are coaxially connected, the latch hook (54) is driven to rotate by the lock core (56), the inclined surface (51) is provided at a front end with an abutment wall (57) for abutting and positioning the torsion spring (55), the latch hook (54) is provided at a lower end with an engaging end (541), the engaging end (541) is fixed to or separated from a positioning portion (13) of the fixing base (10), the latch hook (54) is bent at an upper end to form a display surface (542);
when the fixing base (10) locks the trailer ball (30) in position, the engaging end (541) of the latch hook (54) is embedded in the positioning portion (13), by rotating the lock core (56), the position of the latch hook (54) is locked, and the display surface (542) is directly viewed through the viewing window (52), thereby confirming that the latch hook (54) position has been locked;
when unlocking, the lock core (56) is rotated to cause the engaging end (541) of the latch hook (54) to separate from the positioning portion (13), the display surface (542) cannot be seen through the viewing window (52), and when the lock core (56) is released, the latch hook (54) is driven to rebound by an elasticity of the torsion spring (55) for subsequent fixing use.

2. The bicycle carrier ball-clamp control handle structure as claimed in claim 1, wherein the display surface (542) of the latch hook (54) is coated with color.

3. The bicycle carrier ball-clamp control handle structure as claimed in claim 1, wherein the control portion (50) is provided at a rear end with a sleeve portion (58), and the sleeve portion (58) encloses the main rod member (21).

4. The bicycle carrier ball-clamp control handle structure as claimed in claim 1, wherein triangular washers (40) are disposed between the shaft connection portion (12) of the fixing base (10) and the pivot portions (23).

5. The bicycle carrier ball-clamp control handle structure as claimed in claim 1, wherein the fixing base (10) is provided with a pivotable protective cover.
